# EUROPÄISCHE PATENTSCHRIFT

(11) **EP 4 349 574 B1**
(45) Veröffentlichungstag und Bekanntmachung des Hinweises auf die Patenterteilung: **01.10.2025**
(21) Anmeldenummer: 23201806.9
(22) Anmeldetag: 05.10.2023
(51) Int. Cl.: B29C 70/32, B29C 53/80, B29C 70/38, B29C 70/54

(54) **VERFAHREN ZUR HERSTELLUNG EINES FASERVERBUNDBAUTEILS SOWIE FASERVERBUNDBAUTEIL HIERZU**
METHOD FOR PRODUCING A FIBRE COMPOSITE COMPONENT AND FIBRE COMPOSITE COMPONENT FOR SAME
PROCÉDÉ DE FABRICATION D'UN ÉLÉMENT COMPOSITE RENFORCÉ PAR DES FIBRES ET ÉLÉMENT COMPOSITE RENFORCÉ PAR DES FIBRES CORRESPONDANT

(30) Priorität: 05.10.2022 DE 102022125664
(43) Veröffentlichungstag der Anmeldung: 10.04.2024
(73) Patentinhaber: Deutsches Zentrum für Luft- und Raumfahrt e.V., 53227 Bonn-Oberkassel (DE)
(72) Erfinder: Krombholz, Christian, 21614 Buxtehude (DE)
(74) Vertreter: Gramm, Lins & Partner Patent- und Rechtsanwälte PartGmbB

(56) Entgegenhaltungen:
- EP-A1- 3 957 471
- WO-A2-2012/022972
- DE-A1- 102011 054 650
- US-A1- 2007 229 805
- US-A1- 2018 297 272
- US-A1- 2020 324 474

## Beschreibung

Die Erfindung betrifft ein Verfahren zur Herstellung eines Faserverbundbauteils aus einem Faserverbundwerkstoff aufweisend ein Fasermaterial und ein das Fasermaterial einbettendes Matrixmaterial. Die Erfindung betrifft ebenso ein Faserverbundbauteil hierzu.

Aufgrund der gewichtsspezifischen Festigkeit und Steifigkeit von Faserverbundbauteilen, die aus einem Faserverbundwerkstoff hergestellt werden, sind derartige Bauteile aus der Luft- und Raumfahrt sowie aus vielen weiteren Anwendungsgebieten, wie beispielsweise dem Automobilbereich, heutzutage kaum mehr wegzudenken. Bei der Herstellung eines Faserverbundbauteils wird dabei ein das Fasermaterial einbettendes Matrixmaterial meist unter Temperatur- und Druckbeaufschlagung ausgehärtet und bildet so nach dem Aushärten eine integrale Einheit mit dem Fasermaterial. Die Verstärkungsfasern des Fasermaterials werden hierdurch in ihre vorgegebene Richtung gezwungen und können die auftretenden Lasten in die vorgegebene Richtung abtragen.

Faserverbundwerkstoffe, aus denen derartige Faserverbundbauteile hergestellt werden, weisen in der Regel zwei Hauptbestandteile auf, nämlich zum einen ein Fasermaterial und zum anderen ein Matrixmaterial. Fasermaterial und Matrixmaterial können getrennt vorliegen oder bereits in eingebetteter Form. Hierneben können noch weitere sekundäre Bestandteile verwendet werden, wie beispielsweise Bindermaterialien oder zusätzliche Funktionselemente, die in das Bauteil integriert werden sollen. Werden für die Herstellung trockene Fasermaterialien bereitgestellt, so wird während des Herstellungsprozesses das Matrixmaterial des Faserverbundwerkstoffes in das Fasermaterial durch einen Infusionsprozess infundiert, durch den das trockene Fasermaterial mit dem Matrixmaterial imprägniert wird. Dies geschieht in der Regel aufgrund einer Druckdifferenz zwischen dem Matrixmaterial und dem Fasermaterial, indem beispielsweise das Fasermaterial mittels einer Vakuumpumpe evakuiert wird. Im Gegensatz hierzu sind auch Faserverbundwerkstoffe bekannt, bei denen das Fasermaterial mit dem Matrixmaterial bereits vorimprägniert ist (sogenannte Prepregs), so dass bei deren Verwendung in der Regel ein weiteres Imprägnieren des Fasermaterials entfallen kann.

Als Fasermaterial kommen hierbei insbesondere Kohlenstofffasern oder Glasfasern zum Einsatz, während bei Matrixmaterialien insbesondere thermoplastische und duroplastische Matrixkunststoffe sowie Harze Anwendung finden.

Vor dem Aushärten des Matrixmaterials wird das Fasermaterial meist in ein Formwerkzeug eingebracht bzw. in eine vorbestimmte Form gezwungen, so das mit der formgebenden Werkzeugoberfläche des Formwerkzeuges die spätere Bauteilform nachgebildet wird. Dabei können sowohl trockene als auch vorimprägnierte Fasermaterialien in das Formwerkzeug abgelegt bzw. eingebracht werden. Zur Herstellung von großskaligen Strukturbauteilen, wie beispielsweise Flügelschalen von Verkehrsflugzeugen oder Rotorblätter von Windkraftanlagen, werden zur Optimierung des Ablegeverfahrens automatisierte Faserablegeprozesse verwendet, bei denen mithilfe einer Fertigungsanlage und mindestens einem Faserlegekopf ein dem Faserlegekopf zugeführtes quasiendloses Fasermaterial auf dem Werkzeug abgelegt wird.

Eine solche automatisierte Faserlegeanlage ist beispielsweise aus der DE 10 2010 015 027 B4 bekannt, bei der auf einem umlaufenden Schienensystem mehrere Roboter geführt werden, die jeweils einen Ablegekopf als Endeffektor haben. Mittels einer Faserzuführung werden den Ablegeköpfen kontinuierlich Fasermaterial aus einem Fasermagazin zugeführt, während die einzelnen Roboter mit ihren Ablegeköpfen das ihnen zugeführte Fasermaterial auf einem in der Mitte des umlaufenden Schienensystems vorgesehenen Formwerkzeug ablegen.

Neben dem linearen Ablegen von Fasermaterial auf einem Werkzeug sind auch Wickelprozesse bekannt, bei denen das Fasermaterial um laufend auf einer Werkzeugoberfläche eines Werkzeuges abgelegt wird, welches sich um die eigene Längsachse dreht. Hierbei wird das Fasermaterial aufgrund der Rotationsbewegung von dem Materialspeicher abgezogen und auf die umlaufend ausgebildete Werkzeugoberfläche aufgewickelt. Ein solches Wickelverfahren ist beispielhaft aus der DE 102014 112 311 A1 bekannt, bei dem der Wickelkern flexibel ausgebildet ist, um durch Einstellen von Drücken in dem Wickelkern (auch Liner oder Wickelwerkzeug genannt) einen Prozessdruck auf das aufgewickelte Fasermaterial ausüben zu können.

Die DE 10 2015 113 686 A1 offenbart ein Wickelverfahren, bei dem Sprünge in der Oberfläche hergestellt werden sollen. Diese Sprünge in der Oberfläche weisen dabei konkave Bereiche auf, die normalerweise von dem aufgewickelten Fasermaterial überspannt werden würden. Es wird vorgeschlagen, einen Fixierfaden zu verwenden, der das Fasermaterial radial umlaufenden in die konkave Vertiefung hineindrückt.

Die DE 10 2015 102 440 A1 offenbart ein Wickelverfahren zur Herstellung eines Hohlkörpers mit einem Innengewinde, wobei auch hier das Fasermaterial in die Gewindenut als eine konkave Vertiefung durch einen Faden oder ein entsprechend geformtes Oberwerkzeug hineingedrückt wird.

Die DE 41 22 785 A1 offenbart schließlich ebenfalls ein Wickelverfahren, wobei auch hier konkave Oberflächenformen realisiert werden sollen. Das gezeigte Wickelverfahren weist dabei zwei voneinander verschiedene Wicklungen auf. Eine erste Hauptwicklung erfolgt dabei im Wesentlichen längs zur Rotationsachse, während eine Fixierwicklung den Faden der Hauptwicklung unter einem gewissen Winkel kreuzt und in die konkave Oberflächenform hineindrückt.

Werden bahnförmigen oder strangförmigen Fasermaterialien mithilfe einer automatisierten Faserlegeanlage auf mehrfach gekrümmte Werkzeugoberflächen abgelegt, wie dies beispielsweise bei der Herstellung von Hohlkörpern im Bereich der Endkappen (Pole) erfolgt, so müssen die einzelnen bahnförmigen oder strangförmigen Fasermaterialien in ihrer Breite gekürzt werden, was in der Regel durch Abschneiden einer der äußeren Stränge oder Bänder erfolgt. Da jedoch ein solches Abschneiden derzeit nur orthogonal zur Ablegerichtung möglich ist, entsteht an diesen Stellen zu den jeweils benachbarten Fasermaterialien eine Materiallücke, die sich in jeder Materiallage der herzustellenden Preform mehrfach wiederholt. Hieraus entsteht nicht selten ein geschwächtes Bauteil, da diese Materiallücken zu Faserondulationen führen können, die direkte Minderungen z.B. auf die Druck- und Zugspannungseigenschaften haben. Darüber hinaus hat sich gezeigt, dass derartige Materiallücken bei Druckspeichern, z.B. Wasserstofftanks (LH2), zu einer Minderung der Permeationseigenschaften führen.

Des Weiteren ist in der Konstruktion derartiger Faserverbundbauteile oftmals vorgesehen, dass bei der Ablage der bahnförmigen oder strangförmigen Fasermaterialien bei der automatischen Faserablage konstruktionsbedingt Lücken vorgesehen sind, um ein Überlappen benachbarter Fasermaterialien aufgrund von Fertigungstoleranzen auf jeden Fall zu vermeiden. Die bahnförmigen oder strangförmigen Fasermaterialien werden so konstruktionsbedingt bereits mit einer gewollten Materiallücke zwischen den benachbarten Fasermaterialien abgelegt, was sich ebenfalls - wie bereits zuvor beschrieben - negativ auf das Bauteil und seine Eigenschaften auswirken können. Nicht selten wird hierbei mit zusätzlichen Fasermateriallagen gearbeitet, um diese negativen Auswirkungen zu kompensieren, was jedoch dem Kerngedanken des Leichtbaus mittels Faserverbundwerkstoffen diametral gegenüber steht.

Aus der DE 10 2011 054 650 A1 ist ein Verfahren und eine Vorrichtung zum Aufbau eines Vorformlings bekannt, der aus einer Mehrzahl von zugeschnittenen Matten aus Fasermaterial hergestellt wird. Die Matten werden dabei durch eine Robotereinheit gegriffen und an einer entsprechenden Position platziert, wobei dabei entstehende Lücken erkannt und mithilfe von zugeschnittenen Formelementen ausgefüllt werden.

Die US 2007/0229805 A1 offenbart ein Fertigungssystem zur optischen Inspektion abgelegter Fasermaterialien, indem hierfür ein Laserlichtschnittsensor verwendet wird. Dieser projiziert eine Laserlinie auf die Oberfläche, die untersucht werden soll, wobei diese Laserlinie dann durch eine Kamera aufgenommen wird. Abweichungen von der Geradenlinie resultieren aus Unebenheiten der Oberfläche, sodass hierdurch Lücken oder Stufen detektiert werden können.

Die WO 2012/022972 A1 offenbart ein Verfahren zum Erstellen einer Faserpreform mithilfe von einzelnen Fasermatten (sogenannte sheets). Diese werden auf eine Oberfläche abgelegt, wobei die Positionierung in Abhängigkeit von einem Sensorsignal erfolgt.

Die US 2020/0324474 A1 offenbart ein additives Fertigungsverfahren mittels "Fused Filament Fabrication (FFF)", bei dem ein Kunststoffmaterial eine Druckkopf zugeführt, aufgeschmolzen und dann in einzelnen Strängen ausgegeben wird. Dabei wird zunächst eine erste Gruppe von Strängen ausgegeben, die zueinander beabstandet vorgesehen sind, während anschließend diese Lücken durch eine zweite Gruppe gefüllt werden.

Die EP 3 957 471 A1 offenbart schließlich die Herstellung eines komplexen Bauteils, welches durch ein Verstärkungsteil verstärkt werden soll. An der Grenzfläche zwischen dem ersten Bauteil den zweiten Bauteil entsteht ein Hohlraum, der durch einen Zwickel ausgefüllt werden soll.

Es ist daher Aufgabe der vorliegenden Erfindung ein verbessertes Verfahren zur Herstellung eines Faserverbundbauteils, insbesondere mit komplexer, mehrfach gekrümmter Geometrie, bei dem die aus dem Stand der Technik bekannten Nachteile vermieden werden können.

Die Aufgabe wird mit dem Verfahren gemäß Anspruch 1 erfindungsgemäß gelöst. Vorteilhafte Ausgestaltungen der Erfindung finden sich dann in den entsprechenden Unteransprüchen.

Gemäß Anspruch 1 wird ein Verfahren zur Herstellung eines Faserverbundbauteils aus einem Faserverbundwerkstoff aufweisend ein Fasermaterial und ein das Fasermaterial einbettendes Matrixmaterial vorgeschlagen, welches die folgenden Schritte umfasst
- Bereitstellen eines bahnförmigen oder strangförmigen, quasiendlosen Fasermaterials,
- Ablegen des bandförmigen oder strangförmigen, quasiendlosen Fasermaterials auf eine formgebende, mehrfach gekrümmte Werkzeugoberfläche eines bereitgestellten Formwerkzeuges derart, dass die einzelnen Faserbahnen oder Faserstränge des bandförmigen oder strangförmigen, quasiendlosen Fasermaterials nebeneinander abgelegt werden,
- Erkennen mindestens einer Materiallücke zwischen zwei benachbarten Faserbahnen oder Faserstränge des auf der Werkzeugoberfläche abgelegten bandförmigen oder strangförmigen, quasiendlosen Fasermaterials und deren Abmessungen mittels einer Erkennungseinrichtung,
- Bereitstellen eines Füllmaterials, um die erkannten Materiallücken zwischen benachbarten Faserbahnen oder Faserstränge auszufüllen, und
- Einbringen des Füllmaterials in die erkannten Materiallücken in Abhängigkeit von deren Abmessungen.

Demnach wird zunächst ein bandförmiges oder strangförmiges Fasermaterial bereitgestellt, das in Art eines quasiendlosen Fasermaterials insbesondere zur automatisierten Ablage vorgesehen ist. Dieses bandförmige oder strangförmige Fasermaterial wird nun vorzugsweise automatisiert mithilfe einer Faserlegeanlage auf eine formgebende Werkzeugoberfläche eines bereitgestellten Formwerkzeuges abgelegt, wobei einzelne Faserbahnen oder Faserstränge in einer Faserlage nebeneinander und dann mehrere Faserlagen übereinander abgelegt werden.

Bei jedem Durchgang können dabei eine Mehrzahl von einzelnen Faserbahnen oder Faserstränge abgelegt werden, beispielsweise 8, 16 oder 32 einzelne Faserbahnen oder Faserstränge. Am Ende eines solchen Abwägungsvorgangs kann der Ablegekopf der Faserlegeanlage neu ausgerichtet werden, wobei dann benachbart zu dem bereits abgelegten Faserbahnen oder Faserstränge neue Faserbahnen und Faserstränge auf das Werkzeug bzw. auf eine bereits abgelegte Fasermateriallage abgelegt werden.

Während oder nach dem Ablegen einer vollständigen Fasermateriallage werden mithilfe einer Erkennungseinrichtung Materiallücken zwischen benachbarten Faserbahnen oder Faserstränge detektiert. Das Erkennen derartiger Materiallücken umfasst dabei nicht nur das Detektieren des Vorliegens einer solchen Materiallücke, sondern insbesondere auch die genaue Position in Bezug zu dem Bauteil und/oder deren jeweilige Abmessungen.

Nach dem mindestens eine Materiallücke detektiert und ggf. die genaue Position sowie die Abmessungen dieser Materiallücke festgestellt wurde, wird ein bereitgestelltes Füllmaterial in dieser Materiallücke eingebracht, um die erkannten Materiallücken zwischen benachbarten Faserbahnen oder Faserstränge auszufüllen. Vorzugsweise erfolgt das Einbringen des Füllmaterials nicht erst nach der Fertigstellung der Preform, was ebenfalls denkbar ist, sondern nach jeder abgelegten Fasermateriallage, d.h. bevor neues Fasermaterial auf das bereits abgelegte Fasermaterial aufgebracht wird.

Anschließend wird das Faserverbundbauteil hergestellt, indem das Matrixmaterial, welches in das Fasermaterial eingebettet ist, konsolidiert, d. h. verfestigt bzw. ausgehärtet wird. Das Konsolidieren erfolgt dabei insbesondere durch Temperierung der Faserpreform mit dem eingebetteten Matrixmaterial auf die notwendige Prozesstemperatur, beispielsweise auf mindestens 180 °C. Unter dem Begriff konsolidieren wird insbesondere auch das Aushärten, insbesondere von Reaktionsharzen oder Duroplasten, verstanden.

Mit der vorliegenden Erfindung wird es möglich, die konstruktionsbedingten
Materiallücken bei der Herstellung von Faserverbundbauteilen, bei der Herstellung von Faserverbundbauteilen mit mehrfach gekrümmten Geometrien, zu schließen, wodurch die Festigkeit, Stabilität sowie die Permeationseigenschaften des Bauteils verbessert werden. Dabei kann der vorliegende Prozess vollständig automatisiert erfolgen, wodurch die Bauteilqualität verbessert werden kann.

Bei dem erfindungsgemäßen Verfahren können sowohl trockene als auch vorimprägnierte Fasermaterialien verwendet werden. Werden trockenen Fasermaterialien verwendet, so muss in einem Infusionsprozess das trockene Fasermaterial noch mit einem Matrixmaterial infundiert werden.

Als Füllmaterialien kommen insbesondere Kunststoffe und Harze zum Einsatz, die dem verwendeten Matrixmaterial ähnlich und geeignet sind, die Materiallücken dauerhaft zu schließen. Dabei sollte das Füllmaterial einen ähnlichen Wärmeausdehnungskoeffizienten zu dem Faserverbundwerkstoff besitzen sowie vorzugsweise chemisch eine stoffschlüssige Verbindung innerhalb der Materiallücke zu den umschließenden Materialien erzeugen. Sonst einer besonderen Ausführungsform vorgesehen, dass das Füllmaterial aus dem Matrixmaterial des Faserverbundwerkstoffes besteht oder ein solches Matrixmaterial enthält. Das Füllmaterial kann dabei zusätzlich auch Fasern bzw. Fasermaterialien beinhalten.

Werden trockene Fasermaterialien zur Herstellung der Preform verwendet, so ist es vorteilhaft, wenn das Füllmaterial ebenfalls ein Trockenfasermaterial ist, welches ggf. bebindert ist. Nach dem Einbringen des Trockenfasermaterials in die entsprechende Materiallücke und dem vollständigen Herstellen der Preform wird dann der Infusionsprozess gestartet, so dass sowohl das abgelegte Fasermaterial als auch das in die Materiallücken eingesetzte Trockenfasermaterial mit dem Matrixmaterial infundiert wird. Das als Füllmaterial eingesetzte Trockenfasermaterial wird dabei in Abhängigkeit von den Abmessungen der jeweiligen Materiallücke separat vorkonfektioniert, so dass es den Raum der Materiallücke präzise ausfüllen kann.

Gemäß einer Ausführungsform ist vorgesehen, dass die Fasermaterialoberfläche des auf der Werkzeugoberfläche abgelegten bahnförmigen oder strangförmigen Fasermaterials kontaktlos mittels einer Kamera der Erkennungseinrichtung aufgenommen und Materiallücken zwischen zwei benachbarten Faserbahnen oder Faserstränge durch eine digitale Auswertung der aufgenommenen Fasermaterialoberfläche mittels einer Auswerteeinheit der Erkennungseinrichtung automatisch erkannt werden.

Die Kamera der Erkennungseinrichtung nimmt dabei die Fasermaterialoberfläche auf und generiert digitalen Bilddaten, welche die Fasermaterialoberfläche abbilden. Mithilfe einer Bildauswertung können und Fehlstellen detektiert werden, wie beispielsweise Materiallücken. Hierbei können die digitalen Bilddaten in einem Falschfarbenbild dargestellt, wobei jede Farbe eine Höhe der Fasermaterialoberfläche kodiert. Durch eine digitale Auswertung, insbesondere Bildauswertung, können nun die Materiallücken einschließlich deren Position und Abmessungen erfasst und basierend darauf dann das Füllmaterial eingebracht werden.

Gemäß einer Ausführungsform ist vorgesehen, dass ein Höhenprofil der Fasermaterialoberfläche des auf der Werkzeugoberfläche abgelegten bahnförmigen oder strangförmigen Fasermaterials mittels eines Lichtprojektionsverfahrens erstellt wird, indem eine Lichtlinie mittels einer Lichtquelle der Erkennungseinrichtung auf die Fasermaterialoberfläche aus einer ersten Richtung projiziert, die projizierte Lichtlinie mittels einer Kamera der Erkennungseinrichtung aus einer von der ersten Richtung verschiedenen zweiten Richtung aufgenommen wird, während die Lichtlinie über die Fasermaterialoberfläche bewegt wird, und das Höhenprofil in Abhängigkeit von einer erkannten Deformation der aufgenommenen Lichtlinien mittels einer Recheneinheit der Erkennungseinrichtung erstellt wird, wobei Materiallücken zwischen zwei benachbarten Faserbahnen oder Faserstränge in Abhängigkeit von dem erstellten Höhenprofil mittels einer Auswerteeinheit der Erkennungseinrichtung automatisch erkannt werden.

Ein solches Lichtprojektionsverfahren kann dabei durch einen Laserlichtschnittsensor (LLSS) durchgeführt werden, der eine Laserlinie auf die Fasermaterialoberfläche projiziert und dann aus einem hiervon verschiedenen Aufnahmewinkel die auf die Oberfläche projizierte Laserlinie aufnimmt. Weiß die Oberfläche Unebenheiten auf, so wird die projizierte Laserlinie aus ihrer stringenten Geradlinigkeit deformiert, was Rückschlüsse auf die Höhe der Oberfläche an dieser projizierten Position zulässt. Die Laserlinie wird nun über das gesamte Bauteil bewegt, wobei zu diskreten Zeitpunkten jeweils entsprechende Aufnahmen der Laserlinie gemacht werden, wodurch für die gesamte Bauteiloberfläche ein Höhenprofil erstellt werden kann. Basierend auf diesem Höhenprofil können nun Materiallücken detektiert werden.

Auch hierbei ist es denkbar, dass das Höhenprofil in Form eines Falschfarbenbildes erstellt wird, welches dann einer Bildauswertung unterzogen wird, um basierend auf dem Falschfarbenbild die Materiallücken zu detektieren.

Gemäß einer Ausführungsform ist vorgesehen, dass die Ablage des bahnförmigen oder strangförmigen Fasermaterials auf der formgebenden Werkzeugoberfläche mittels einer Simulationseinheit der Erkennungseinrichtung basierend auf Fertigungsdaten und/oder Konstruktionsdaten zunächst simuliert wird, wobei in Abhängigkeit von der simulierten Ablage des bahnförmigen oder strangförmigen Fasermaterials die Materiallücken zwischen zwei benachbarten Faserbahnen oder Faserstränge erkannt werden.

Bei dieser Ausführungsform wird das Bauteil nicht vollständig gescannt, um die Materiallücken zu detektieren, sondern die Materiallücken werden aus den Fertigungsdaten bzw. den Konstruktionsdaten statisch extrahiert. Hierfür wird die Ablage des Fasermaterials gemäß den Fertigungsdaten bzw. Konstruktionsdaten simuliert, wobei die dabei entstehenden - gewollten oder ungewollten - Materiallücken in der Simulation erkennbar werden.

Es hat sich gezeigt, dass dies in vielen Fällen ausreichend ist, um das Füllmaterial gemäß den detektierten Materiallücken prozesssicher in diese einzubringen.

Gemäß einer Ausführungsform ist vorgesehen, dass für mindestens eine erkannte Materiallücke separat ein vorkonfektioniertes Füllpatch aus dem Füllmaterial basierend auf den Abmessungen der betreffenden Materiallücke hergestellt wird, wobei das hergestellte Füllpatch anschließend in die betreffende Materiallücke des abgelegten Fasermaterials eingesetzt wird. Das Füllpatch wird dabei aus dem Füllmaterial (bspw. trockenes Fasermaterial, vorimprägniertes Fasermaterial, (elastisches) Kunststoffmaterial ohne Fasermaterial oder andere) so hergestellt, dass das Füllpatch den Raum der Materiallücke innerhalb von Toleranzen exakt einnehmen und besetzen kann.

Hierbei wird in einem separaten Prozessschritt ein vorkonfektioniertes Füllpatch aus dem Füllmaterial hergestellt, welches den detektierten Abmessungen der betreffenden Materiallücke entspricht. Dieses so separat hergestellte, vorkonfektionierte Füllpatch kann nach dessen Herstellung in die betreffende Materiallücke eingesetzt werden. Dies kann beispielsweise manuell erfolgen, indem das Füllpatch in die Materiallücke händisch eingesetzt wird. Denkbar ist aber auch, dass mithilfe eines Pick&Place Verfahrens das Füllpatch automatisch durch eine Robotereinheit aufgenommen und in die betreffende Materiallücke eingesetzt wird.

Gemäß einer Ausführungsform ist vorgesehen, das vorkonfektionierte Füllpatch aus dem Füllmaterial mittels einer 3D-Druckvorrichtung hergestellt wird. Als Grundlage für die Herstellung des Füllpatch dienen dabei die detektierten Abmessungen der Materiallücke, in die das Füllpatch eingesetzt werden soll.

Gemäß einer Ausführungsform ist vorgesehen, dass das Füllmaterial mittels einer Auftragsvorrichtung, der das Füllmaterial kontinuierlich zugeführt wird, in mindestens eine Materiallücke des abgelegten Fasermaterials automatisch eingebracht wird. Eine solche Auftragsvorrichtung kann beispielsweise eine Druckvorrichtung sein, die das Füllmaterial kontinuierlich ausgibt und in die Materiallücke einbringt. Bei dieser Ausführungsform wird das herzustellende Füllpatch direkt in der Materiallücke gedruckt bzw. hergestellt, so dass ein zusätzliches Einbringen eines separat hergestellten Füllpatches nicht mehr erforderlich ist. Die Auftragsvorrichtung kann dabei an einem Roboter befestigt sein, der automatisch die Auftragsvorrichtung an der erkannten Materiallücke positioniert und dann das Füllmaterial in die Materiallücke druckt (bspw. durch Einpressen in die Materiallücke), so dass der gesamte Raum der Materiallücke ausgefüllt wird.

Dies kann bspw. parallel zu der Ablage der Fasermaterialien im Nachlauf erfolgen, wenn mehr als ein Roboter Zugriff auf das Werkzeug hat. In diesem Fall muss nicht abgewartet werden, bis eine vollständige Fasermateriallage erstellt wurde, so dass die Prozesszeiten zum Ausfüllen der Materiallücken deutlich verringert werden können.

Ein weiterer Aspekt der vorliegenden Erfindung ist dabei ein Faserverbundbauteil, das aus einem Faserverbundwerkstoff gemäß dem vorstehend beschriebenen Verfahren hergestellt ist. Ein solches Faserverbundbauteil kann bspw. ein Hohlbauteil sein.

Das bandförmige oder strangförmige Fasermaterial kann dabei in Form von Materialbahnen abgelegt, die aus einer Mehrzahl Einzelsträngen oder Einzelbahnen bzw. Fasersträngen oder Faserbahnen bestehen. So kann eine Materialbahn beispielsweise aus 8, 16 oder 32 Einzelsträngen bzw. Fasersträngen gebildet sein, wobei einzelne Einzelstränge oder Einzelbahnen einer Materialbahn abgeschnitten und abgeschaltet werden können. Nachdem eine Materialbahn abgelegt wurde, werden hierzu benachbart weitere Materialbahnen abgelegt.

Die vorliegende Erfindung wird anhand der beigefügten Figuren beispielhaften erläutert. Es zeigen:
- Figur 1: schematische Darstellung eines Ablegekopfes mit einem Laserlichtschnittsensor im Nachlauf;
- Figur 2: Darstellung eines Bauteil mit komplexer Geometrie in Form eines Drucktanks;
- Figur 3: detaillierte Darstellung der einzelnen Faserbahnen mit Materiallücken.

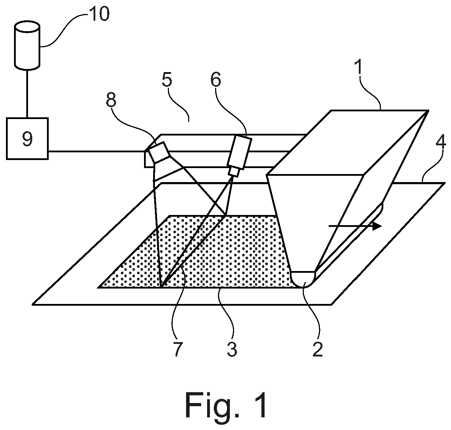

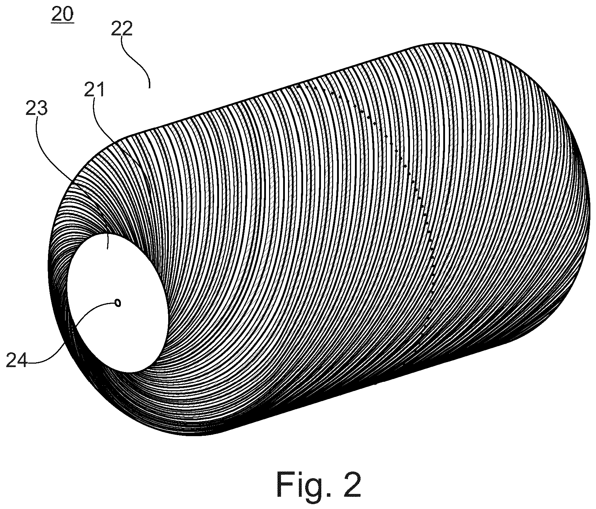

Figur 1 zeigt einen Teil einer Faserlegeanlage zur Aufnahme eines Höhenprofilbildes 10 (beispielhaft dargestellt in Figur 2) mittels eines Laserlichtschnittsensors 5 im Nachlauf eines Ablegekopfes 1, der am unteren Ende eine Anpressrolle 2 aufweist, mit der ein flächiges Fasermaterial 3 auf eine formgebende Werkzeugoberfläche 4 abgelegt werden soll. Die abzulegenden Fasermaterialien 3 können dabei trockene Rovings bzw. Tows sein, aber auch vorimprägnierte Prepregs. Dabei werden meistens mehrere Rovings oder Tows gleichzeitig abgelegt.

Im Nachlauf des Ablegekopfes 1 ist an dem Ablegekopf 1 ein Laserlichtschnittsensor 5 angeordnet. Mit Hilfe einer Laserlichtquelle 6 wird eine Laserlichtlinie 7 auf den bereits abgelegten Teil des Faserhalbzeuges 3 projiziert. Die Projektion des Laserlichtes in Form einer Laserlichtlinie 7 auf das Fasermaterial 3 erfolgt dabei aus einer ersten Richtung.

Der Laserlichtschnittsensor 5 weist des Weiteren eine Kamera 8 auf, die in einem definierten Abstand zu der Laserlichtquelle 6 angeordnet ist und die auf das Faserhalbzeug 3 projizierte Laserlichtlinie 7 aus einer anderen zweiten Richtung unter einem vorgegebenen und definierten Winkel aufnimmt.

Die Kamera 8 des Lichtschnittsensors 5 ist mit einer Bildauswerteeinheit 9 verbunden, welche die zeilenweise aufgenommenen Bilddaten der Kamera 8 über eine Datenschnittstelle erhält. Die zeilenweise aufgenommenen Bilddaten werden nun dahingehend analysiert, dass sich entlang der Laserlichtlinie 7 ein eindimensionales Höhenprofil an dieser Laserlichtlinie 7 ergibt. Hierfür wird an einer Vielzahl von Punkten entlang der Laserlichtlinie eine Höheninformationen ermittelt, wobei alle Höheninformationen entlang dieser Laserlichtlinie 7 letztlich das linienförmige Höhenprofil ergeben.

Dieses linienförmige Höhenprofil mit den einzelnen Höheninformationen entlang der Laserlichtlinie 7 wird nun einer Datenverarbeitungsanlage 10 bspw. mit einem maschinellen Lernsystem zugeführt, um die zu füllenden Materiallücken zu erkennen.

Da der Ablegekopf 1 zusammen mit dem Lichtschnittsensor 5 kontinuierlich auf der Werkzeugoberfläche 4 verfahren wird, ergeben sich eine Vielzahl von linienförmigen Höhenprofilen, die kontinuierlich durch die Bildauswerteeinheit 9 erstellt und dann der Datenverarbeitungsanlage 10 zur Fehlerklassifikationen bereitgestellt werden.

Figur 2 zeigt einen Drucktank 20, der durch Ablegen von einzelnen Bahnen 21 aus einem strangförmigen oder bandförmigen Fasermaterial lagenweise gebildet wird, wobei das Fasermaterial auf einen innenliegenden Liner aufgetragen werden kann. Das formgebende Werkzeug, in diesem Fall der Liner, weist dabei einen zylindrischen Hauptteil 22 auf, an denen jeweiligen beiden Enden Endkappen 23 vorgesehen sind. Diese Endkappen 23 verlaufen ausgehend von dem zylindrischen Hauptteil 22 hin zu den Polen 24 des Liners, wobei die Oberfläche in diesem Übergangsbereich mehrfach gekrümmt ist.

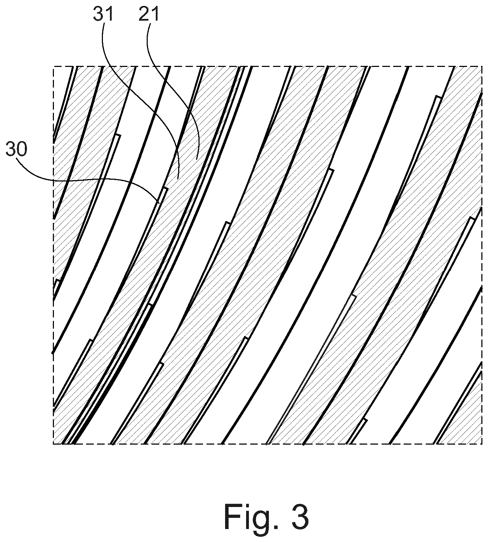

In diesem mehrfach gekrümmten Übergangsbereich müssen die parallel verlaufenden Bahnen 21 aus dem strangförmigen oder bandförmigen Fasermaterial verjüngt werden, sodass jede einzelnen Bahn eine immer geringer werdende Breite erhält, je dichter sie den Polen 24 kommt. Da jedoch die aus mehreren Einzelsträngen bestehenden Bahnen 21 nur orthogonal zur Ablegerichtung geschnitten werden können, ergeben sich Materiallücken 30 zu den benachbarten Bahnen, wie in Figur 3 detailliert dargestellt ist.

Die in Figur 3 dargestellte Materiallücke 30 entsteht dabei dadurch, dass bei der Bahn 21 der äußere Einzelstrang 31 durchtrennt und dann nicht weiter abgelegt wird, wodurch die Bahn 21 im weiteren Verlauf sprunghaft verjüngt. Durch diese Verjüngung entsteht eine Materiallücke 30, die sich in Art eines Spaltes längs der Ablegerichtung ausbildet, bis die Bahn 21 wieder auf die benachbarte Materialbahn trifft.

Wurden die einzelnen Materialbahnen 21 mit einer Faserlegeanlage, wie sie beispielhaft in Figur 1 dargestellt ist, abgelegt, so wurden die bereits abgelegten Fasermaterialien mithilfe des Laserlichtschnittsensors gescannt und ein Höhenprofil erstellt. Nach Ablage einer Einzellage aus Fasermaterial bestehend aus einer Mehrzahl von Materialbahnen 21, herrscht Kenntnis darüber, an welchen Positionen auf der Fasermaterialoberfläche die entsprechenden Materiallücken 30 mit ihren jeweiligen Abmessungen existieren.

Es kann nun ein Füllpatch für jede dieser Materiallücken 30 separat erstellt werden, um diese Materiallücken 30 in der abgelegten Einzellage zu schließen. Ist dies erfolgt, werden die einzeln hergestellten Füllpatche (nicht dargestellt) in die jeweilige Materiallage 30 eingesetzt, wobei dann anschließend eine weitere Lage Fasermaterial wie vorstehend beschrieben abgelegt werden kann. Der Prozess wird dabei solange wiederholt, bis sämtliche Lagen aus Fasermaterial abgelegt sind.

### Bezugszeichenliste

- 1: Ablegekopf
- 2: Anpressrolle
- 3: Fasermaterial
- 4: Werkzeugoberfläche
- 5: Laserlichtschnittsensor
- 6: Laserlichtquelle
- 7: Laserlichtlinie
- 8: Kamera
- 9: Bildauswerteeinheit
- 10: digitale Datenverarbeitungsanlage
- 20: Drucktank
- 21: Fasermaterialbahnen
- 22: zylindrische Hauptteil
- 23: Endkappe
- 24: Pol
- 30: Materiallücke
- 31: Einzelstrang

## Patentansprüche

1. Verfahren zur Herstellung eines Faserverbundbauteils aus einem Faserverbundwerkstoff aufweisend ein Fasermaterial und ein das Fasermaterial einbettendes Matrixmaterial, wobei das Verfahren die folgenden Schritte umfasst:
- Bereitstellen eines bandförmigen oder strangförmigen, quasiendlosen Fasermaterials (3),
- Ablegen des bandförmigen oder strangförmigen, quasiendlosen Fasermaterials (3) auf eine formgebende, mehrfach gekrümmte Werkzeugoberfläche (4) eines bereitgestellten Formwerkzeuges derart, dass die einzelnen Faserbahnen oder Faserstränge des bandförmigen oder strangförmigen, quasiendlosen Fasermaterials (3) nebeneinander abgelegt werden,
- Erkennen mindestens einer Materiallücke (30) zwischen zwei benachbarten Faserbahnen oder Faserstränge des auf der Werkzeugoberfläche abgelegten bandförmigen oder strangförmigen, quasiendlosen Fasermaterials und deren Abmessungen mittels einer Erkennungseinrichtung (8, 9, 10)
- Bereitstellen eines Füllmaterials, um die erkannten Materiallücken (30) zwischen benachbarten Faserbahnen oder Faserstränge auszufüllen, und
- Einbringen des Füllmaterials in die erkannten Materiallücken in Abhängigkeit von deren Abmessungen.

2. Verfahren nach Anspruch 1, **dadurch gekennzeichnet, dass** die Fasermaterialoberfläche des auf der Werkzeugoberfläche abgelegten bandförmigen oder strangförmigen Fasermaterials kontaktlos mittels einer Kamera der Erkennungseinrichtung aufgenommen und Materiallücken zwischen zwei benachbarten Faserbahnen oder Faserstränge durch eine digitale Auswertung der aufgenommenen Fasermaterialoberfläche mittels einer Auswerteeinheit der Erkennungseinrichtung automatisch erkannt werden.

3. Verfahren nach Anspruch 1 oder 2, **dadurch gekennzeichnet, dass** ein Höhenprofil der Fasermaterialoberfläche des auf der Werkzeugoberfläche abgelegten bandförmigen oder strangförmigen Fasermaterials mittels eines Lichtprojektionsverfahrens erstellt wird, indem eine Lichtlinie mittels einer Lichtquelle der Erkennungseinrichtung auf die Fasermaterialoberfläche aus einer ersten Richtung projiziert, die projizierte Lichtlinie mittels einer Kamera der Erkennungseinrichtung aus einer von der ersten Richtung verschiedenen zweiten Richtung aufgenommen wird, während die Lichtlinie über die Fasermaterialoberfläche bewegt wird, und das Höhenprofil in Abhängigkeit von einer erkannten Deformation der aufgenommenen Lichtlinien mittels einer Recheneinheit der Erkennungseinrichtung erstellt wird, wobei Materiallücken zwischen zwei benachbarten Faserbahnen oder Faserstränge in Abhängigkeit von dem erstellten Höhenprofil mittels einer Auswerteeinheit der Erkennungseinrichtung automatisch erkannt werden.

4. Verfahren nach einem der vorhergehenden Ansprüche, **dadurch gekennzeichnet, dass** die Ablage des bandförmigen oder strangförmigen Fasermaterials auf der formgebenden Werkzeugoberfläche mittels einer Simulationseinheit der Erkennungseinrichtung basierend auf Fertigungsdaten und/oder Konstruktionsdaten zunächst simuliert wird, wobei in Abhängigkeit von der simulierten Ablage des bandförmigen oder strangförmigen Fasermaterials die Materiallücken zwischen zwei benachbarten Faserbahnen oder Faserstränge erkannt werden.

5. Verfahren nach einem der vorhergehenden Ansprüche, **dadurch gekennzeichnet, dass** für mindestens eine erkannte Materiallücke separat ein vorkonfektioniertes Füllpatch aus dem Füllmaterial basierend auf den Abmessungen der betreffenden Materiallücke hergestellt wird, wobei das hergestellte Füllpatch anschließend in die betreffende Materiallücke des abgelegten Fasermaterials eingesetzt wird.

6. Verfahren nach Anspruch 5, **dadurch gekennzeichnet, dass** das vorkonfektionierte Füllpatch aus dem Füllmaterial mittels einer 3D-Druckvorrichtung hergestellt wird.

7. Verfahren nach einem der vorhergehenden Ansprüche, **dadurch gekennzeichnet, dass** das Füllmaterial mittels einer Auftragsvorrichtung, der das Füllmaterial kontinuierlich zugeführt wird, in mindestens eine Materiallücke des abgelegten Fasermaterials automatisch eingebracht wird.

8. Verfahren nach einem der vorhergehenden Ansprüche, **dadurch gekennzeichnet, dass** das Füllmaterial aus dem Matrixmaterial des Faserverbundwerkstoffes besteht oder ein solches Matrixmaterial enthält oder dass das Füllmaterial aus einem Faserverbundwerkstoff mit Matrixmaterial und Fasermaterial besteht oder einen solchen Faserverbundwerkstoff enthält oder dass das Füllmaterial ein trockenes Fasermaterial ist.

9. Verfahren nach einem der vorhergehenden Ansprüche, **dadurch gekennzeichnet, dass** nach dem Einbringen des Füllmaterials in mindestens eine der erkannten Materiallücken das Matrixmaterial konsolidiert wird.

10. Faserverbundbauteil aus einem Faserverbundwerkstoff erhältlich nach dem Verfahren gemäß einem der vorhergehenden Ansprüche.

11. Faserverbundbauteil nach Anspruch 10, **dadurch gekennzeichnet, dass** das Faserverbundbauteil ein Hohlbauteil ist.

## Claims

1. Method for manufacturing a fiber composite component from a fiber composite material comprising a fiber material and a matrix material embedding the fiber material, wherein the method comprises the following steps:
- providing a ribbon-shaped or strand-shaped, quasi-endless fiber material (3),
- Depositing the ribbon-shaped or strand-shaped, quasi-endless fiber material (3) on a shaping, multiply curved tool surface (4) of a provided forming tool in such a manner that the individual fiber tracks or fiber strands of the ribbon-shaped or strand-shaped, quasi-endless fiber material (3) are deposited next to one another,
- detecting at least one material gap (30) between two adjacent fiber tracks or fiber strands of the ribbon-shaped or strand-shaped, quasi-endless fiber material deposited on the tool surface and their dimensions by means of a detection device (8, 9, 10),
- providing a filling material to fill the detected material gaps (30) between adjacent fiber tracks or fiber strands, and
- introducing the filling material into the detected material gaps depending on their dimensions.

2. Method according to claim 1, **characterized in that** the fiber material surface of the ribbon-shaped or strand-shaped fiber material deposited on the tool surface is recorded without contact by means of a camera of the detection device, and material gaps between two adjacent fiber tracks or fiber strands are automatically detected by digital evaluation of the recorded fiber material surface by means of an evaluation unit of the detection device.

3. Method according to claim 1 or 2, **characterized in that** a elevation profile of the fiber material surface of the ribbon-shaped or strand-shaped fiber material deposited on the tool surface is created by means of a light projection method, **in that** a light line is projected onto the fiber material surface from a first direction by means of a light source of the detection device, the projected light line is recorded by means of a camera of the detection device from a second direction different from the first direction, while the light line is moved over the fiber material surface, and the elevation profile is created as a function of a detected deformation of the recorded light lines by means of a computing unit of the detection device, wherein material gaps between two adjacent fiber tracks or fiber strands are automatically detected as a function of the created elevation profile by means of an evaluation unit of the detection device.

4. Method according to one of the preceding claims, **characterized in that** the deposition of the ribbon-shaped or strand-shaped fiber material on the shaping tool surface is first simulated by means of a simulation unit of the detection device based on production data and/or design data, wherein, depending on the simulated deposition of the ribbon-shaped or strand-shaped fiber material, the material gaps between two adjacent fiber webs or fiber strands are detected.

5. Method according to one of the preceding claims, **characterized in that** a pre-assembled filling patch is produced separately from the filling material based on the dimensions of the relevant material gap for at least one detected material gap, wherein the pre-assembled filling patch is then inserted into the relevant material gap of the deposited fiber material.

6. Method according to claim 5, **characterized in that** the pre-assembled filling patch is produced from the filling material by means of a 3D printing device.

7. Method according to one of the preceding claims, **characterized in that** the filling material is automatically introduced into at least one material gap of the deposited fiber material by means of an application device to which the filling material is continuously supplied.

8. Method according to one of the preceding claims, **characterized in that** the filling material consists of the matrix material of the fiber composite material or contains such a matrix material, or that the filling material consists of a fiber composite material with matrix material and fiber material or contains such a fiber composite material, or that the filling material is a dry fiber material.

9. Method according to one of the preceding claims, **characterized in that** after the filling material has been introduced into at least one of the detected material gaps, the matrix material is consolidated.

10. Fiber composite component made of a fiber composite material obtainable by the method according to one of the preceding claims.

11. Fiber composite component according to claim 10, **characterized in that** the fiber composite component is a hollow component.

## Revendications

1. Procédé de fabrication d'un composant composite renforcé de fibres à partir d'un matériau composite renforcé de fibres comprenant un matériau fibreux et un matériau matriciel enrobant le matériau fibreux, le procédé comprenant les étapes suivantes consistant à :
- fournir un matériau fibreux (3) sous forme de bande ou de brin quasiment sans fin,
- déposer le matériau fibreux (3) en forme de bande ou de brin quasiment sans fin sur une surface d'outil de formage (4) multi-courbe d'un outil de formage fourni, de telle sorte que les bandes ou brins de fibres individuels du matériau fibreux (3) en forme de bande ou de brin quasiment sans fin soient déposés les uns à côté des autres,
- détecter au moins une lacune de matériau (30) entre deux bandes ou brins de fibres adjacents du matériau fibreux en forme de bande ou de brin quasiment sans fin, déposé sur la surface de l'outil, et détecter leurs dimensions à l'aide d'un dispositif de détection (8, 9, 10),
- fournir un matériau de remplissage pour combler les lacunes de matériau (30) détectées entre les bandes ou brins de fibres adjacents, et
- introduire le matériau de remplissage dans les lacunes de matériau détectées en fonction de leurs dimensions.

2. Procédé selon la revendication 1,
**caractérisé en ce que** la surface du matériau fibreux sous forme de bande ou de brin déposé sur la surface d'outil est enregistrée sans contact à l'aide d'une caméra du dispositif de détection, et les lacunes de matériau entre deux bandes ou brins de fibres adjacents sont détectées automatiquement à l'aide d'une unité d'évaluation du dispositif de détection par une évaluation numérique de la surface de matériau fibreux enregistrée.

3. Procédé selon la revendication 1 ou 2,
**caractérisé en ce qu'**un profil de hauteur de la surface du matériau fibreux en forme de bande ou de brin déposé sur la surface de l'outil est créé à l'aide d'un procédé de projection de lumière, du fait qu'une ligne lumineuse est projetée à l'aide d'une source lumineuse du dispositif de détection sur la surface du matériau fibreux à partir d'une première direction, la ligne lumineuse projetée est enregistrée à l'aide d'une caméra du dispositif de détection à partir d'une deuxième direction différente de la première direction, pendant que la ligne lumineuse est déplacée par-dessus la surface du matériau fibreux, et le profil de hauteur est créé en fonction d'une déformation détectée des lignes lumineuses enregistrées à l'aide d'une unité de calcul du dispositif de détection, les lacunes de matériau entre deux bandes ou brins de fibres adjacents étant détectées automatiquement en fonction du profil de hauteur créé, à l'aide d'une unité d'évaluation du dispositif de détection.

4. Procédé selon l'une des revendications précédentes,
**caractérisé en ce que** la dépose du matériau fibreux en forme de bande ou de brin sur la surface de l'outil de formage est d'abord simulée à l'aide d'une unité de simulation du dispositif de détection sur la base de données de fabrication et/ou de conception, les lacunes de matériau entre deux bandes ou brins de fibres adjacents étant détectées en fonction de la dépose simulée du matériau fibreux en forme de bande ou de brin.

5. Procédé selon l'une des revendications précédentes,
**caractérisé en ce que**, pour au moins une lacune de matériau détectée, un patch de remplissage pré-confectionné est fabriqué séparément à partir du matériau de remplissage sur la base des dimensions de la lacune de matériau concernée, le patch de remplissage fabriqué étant ensuite inséré dans la lacune de matériau concernée du matériau fibreux déposé.

6. Procédé selon la revendication 5,
**caractérisé en ce que** le patch de remplissage pré-confectionné à partir du matériau de remplissage est fabriqué à l'aide d'un dispositif d'impression 3D.

7. Procédé selon l'une des revendications précédentes,
**caractérisé en ce que** le matériau de remplissage est introduit automatiquement dans au moins une lacune du matériau fibreux déposé à l'aide d'un dispositif d'application auquel le matériau de remplissage est acheminé en continu.

8. Procédé selon l'une des revendications précédentes,
**caractérisé en ce que** le matériau de remplissage est constitué du matériau matriciel du matériau composite renforcé de fibres ou contient un tel matériau matriciel, ou **en ce que** le matériau de remplissage est constitué d'un matériau composite renforcé de fibres, comprenant un matériau matriciel et un matériau fibreux, ou contient un tel matériau composite renforcé de fibres, ou **en ce que** le matériau de remplissage est un matériau fibreux sec.

9. Procédé selon l'une des revendications précédentes,
**caractérisé en ce que**, après l'introduction du matériau de remplissage dans l'une au moins des lacunes de matériau détectées, le matériau matriciel est consolidé.

10. Composant composite renforcé de fibres constitué d'un matériau composite renforcé de fibres, pouvant être obtenu par le procédé selon l'une des revendications précédentes.

11. Composant composite renforcé de fibres selon la revendication 10, **caractérisé en ce que** le composant composite renforcé de fibres est un composant creux.
